(19) Europäisches Patentamt
European Patent Office
Office européen des brevets

(11) EP 4 389 700 B1

(12) **EUROPEAN PATENT SPECIFICATION**

(45) Date of publication and mention of the grant of the patent:
**02.09.2026 Bulletin 2026/36**

(21) Application number: **22858220.1**

(22) Date of filing: **14.07.2022**

(51) International Patent Classification (IPC):
***C09K 11/70*** (2006.01) ***C09K 11/02*** (2006.01)
***B82Y 20/00*** (2011.01) ***B82Y 30/00*** (2011.01)
***B82Y 40/00*** (2011.01) ***C01B 25/08*** (2006.01)

(52) Cooperative Patent Classification (CPC):
**B82Y 20/00; B82Y 30/00; B82Y 40/00; C01B 25/08; C09K 11/025; C09K 11/70**

(86) International application number:
**PCT/JP2022/027708**

(87) International publication number:
**WO 2023/021897 (23.02.2023 Gazette 2023/08)**

(54) **METHOD FOR PRODUCING CORE/SHELL TYPE SEMICONDUCTOR NANOPARTICLE, AND SEMICONDUCTOR NANOPARTICLE COMPOSITE**

VERFAHREN ZUR HERSTELLUNG VON KERN/HÜLLE HALBLEITERNANOPARTIKELN UND HALBLEITERNANOPARTIKELVERBUNDSTOFF

PROCÉDÉ DE PRODUCTION DE NANOPARTICULES SEMICONDUCTRICES DE TYPE NOYAU/ENVELOPPE ET COMPOSITE DE NANOPARTICULES SEMI-CONDUCTRICES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.08.2021 JP 2021133629**

(43) Date of publication of application:
**26.06.2024 Bulletin 2024/26**

(73) Proprietor: **Shoei Chemical Inc.**
**Tokyo 163-0443 (JP)**

(72) Inventors:
- **MITSUKA, Yuko**
  **Tosu-shi, Saga 841-0048 (JP)**
- **SASAKI, Hirokazu**
  **Tosu-shi, Saga 841-0048 (JP)**
- **MORIYAMA, Takafumi**
  **Tosu-shi, Saga 841-0048 (JP)**
- **KIDO, Makoto**
  **Tosu-shi, Saga 841-0048 (JP)**
- **YOSHIMURA, Takeshi**
  **Amagasaki-shi, Hyogo 660-0095 (JP)**
- **NAKAMURA, Mako**
  **Amagasaki-shi, Hyogo 660-0095 (JP)**

(74) Representative: **Müller-Boré & Partner Patentanwälte PartG mbB**
**Friedenheimer Brücke 21**
**80639 München (DE)**

(56) References cited:
**WO-A1-2019/022217** **WO-A1-2021/166908**
**WO-A2-2008/140495** **JP-A- 2020 172 479**
**JP-A- 2020 176 044** **US-A1- 2011 223 110**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 389 700 B1

## Description

TECHNICAL FIELD

The present invention relates to a method for producing a core/shell type semiconductor nanoparticle and a semiconductor nanoparticle composite.

BACKGROUND ART

Semiconductor nanoparticles having a very fine particle size (quantum dot: QD) are used as a wavelength conversion material in a display. The semiconductor nanoparticle is a fine particle that can exhibit a quantum confinement effect, in which the width of the band gap varies depending on the size of the nanoparticle. The exciton formed in the semiconductor particle by a photoexcitation, a charge injection, or other means emits a photon having the energy corresponding to a band gap through recombination, making it possible to control the emission wavelength by adjusting the crystal size of the semiconductor nanoparticle, thereby enabling light having an intended wavelength to be emitted.

Currently, the semiconductor nanoparticle having a core/shell type structure is widely used as the semiconductor nanoparticle. This is because the core/shell type structure fills the dangling bond on the core surface, thereby reducing a surface defect.

The semiconductor nanoparticles that are used are those having such a core/shell type structure consisting of a group III-V type core and a group II-VI type shell. However, the difference in lattice constants between the group III-V type core and the group II-VI type shell can readily form a defect level, resulting in non-emission recombination of excitons through the defect level, thereby having a tendency to deteriorate the optical properties in the semiconductor nanoparticle formed through the defect level. Therefore, it is important to form the group II-VI type shell having generation of the defect level suppressed on the surface of the group III-V type core.

The SILAR method is known as the method for forming a shell on the surface of a core particle. In the SILAR method, shell precursors are alternately added to the core particle, and the added shell precursors react on the particle surface to form a shell. For example, a Zn precursor is first added to a core particle, followed by successively adding a S precursor, a Zn precursor, a S precursor, and so on, whereby alternately bringing the core particle into contact with the two types of shell precursors, i.e., the raw materials for the shell, to form alternating layers of the two types of shell precursors on the particle surface, in which the shell is formed by reacting these two types of shell precursors.

In addition, in Patent Literature 1 there is a description about the use of zinc oleate, zinc hexanoate, zinc octanoate, zinc laurate, zinc palmitate, zinc stearate, zinc dithiocarbamate, and the like as the Zn precursor to form the shell.

WO2008/140495 A2 describes a method to produce water-dispersible highly luminescent quantum dots for biomedical imaging.

CITATION LIST

PATENT LITERATURE

Patent Literature 1: National Publication of International Patent Application No. 2019-515338

NON PATENT LITERATURE

Non-Patent Literature 1: Renguo Xie et al., J.AM.CHEM.SOC., 127, 7480-7488 (2005)
Non-Patent Literature 2: Ken-Tye Yong et al., ACS Nano, 3, 502-510 (2009)

SUMMARY OF INVENTION

Technical Problem

However, the SILAR method requires strict control of the amounts of the precursors added in the formation of the precursor layers; if the amounts of the precursors added are too small, the shell cannot be sufficiently formed, resulting in deterioration of optical properties, on the other hand, if the amounts are too much, the excess precursors may change particle’s properties as well as this may cause formation of byproducts.

In addition, because the particle is contacted with the two types of shell precursors separately and alternately

multiple times, the method for producing the semiconductor nanoparticle becomes cumbersome.

Therefore, an object of the present invention is, in the case where two or more types of shell precursors are used to produce the semiconductor nanoparticle having a core/shell type structure, to provide a method for producing a semiconductor nanoparticle that can simply produce a semiconductor nanoparticle having a core/shell type structure that has excellent optical properties.

Solution to Problem

The inventors of the present invention carried out an extensive investigation to solve the above problem, and as a result, it has been found that by using a zinc salt of a carboxylic acid having a specific carbon number and a specific branching degree as a group II element precursor to be added to a core particle dispersion solution so as to react with a group VI element precursor on a surface of a core particle, a core/shell type semiconductor nanoparticle having excellent optical properties can be obtained even if the group II element precursor and the group IV element precursor are not brought into contact with the core particle separately and alternately multiple times, in other words, even if all the group II element precursor and the group VI element precursor are brought into contact and reacted with the core particle at a time, thereby completing the present invention.

In other words, the present invention (1) provides a method for producing a core/shell type semiconductor particle comprising a shell forming process at which a raw material zinc carboxylate salt and a group VI element precursor are added to a core particle dispersion solution to cause a reaction between the raw material zinc carboxylate salt and the group VI element precursor in the presence of the core particle to form a shell that includes zinc and a group VI element on a surface of the core particle, in which

a ratio of carboxylic acids having 8 to 10 carbon atoms in whole of carboxylic acids that form the raw material zinc carboxylate salt is 80.0% by mass or more, and
an average branching degree of the whole of the carboxylic acids that form the raw material zinc carboxylate salt is in the range of 1.1 to 2.9.

In addition, the present invention (2) provides the method for producing the core/shell type semiconductor nanoparticle according to (1), in which the core particle comprises In and P.

In addition, the present invention (3) provides the method for producing the core/shell type semiconductor nanoparticle according to (1) or (2), in which an addition amount of the raw material zinc carboxylate salt is such that the mole ratio of Zn in the raw material zinc carboxylate salt to In in the core particle (Zn/In) is in the range of 5 to 50.

In addition, the present invention (4) provides the method for producing the core/shell type semiconductor nanoparticle according to any of (1) to (3), in which the reaction between the raw material zinc carboxylate salt and the group VI element precursor is conducted in the presence of a halogen element.

In addition, the present invention (5) provides a core/shell type semiconductor nanoparticle composite comprising a core/shell type semiconductor nanoparticle and a ligand that is coordinated to a surface of the core/shell type semiconductor nanoparticle, in which

the shell comprises at least Zn,
the ligand comprises a carboxylic acid,
a ratio of carboxylic acids having 8 to 10 carbon atoms in whole of carboxylic acids that are included as the ligand is 80% by mass or more, and
an average branching degree of the whole of the carboxylic acids that are included as the ligand is in the range of 1.1 to 2.9.

In addition, the present invention (6) provides the core/shell type semiconductor nanoparticle composite according to (5), in which the core comprises In and P.

In addition, the present invention (7) provides the core/shell type semiconductor nanoparticle composite according to (5) or (6), in which an emission peak wavelength of the core/shell type semiconductor nanoparticle composite is in the range of 590 to 650 nm.

In addition, the present invention (8) provides the core/shell type semiconductor nanoparticle composite according to any of (5) to (7), in which a full width at half maximum (FWHM) of an emission spectrum of the core/shell type semiconductor nanoparticle composite is 37.0 nm or less.

In addition, the present invention (9) provides the core/shell type semiconductor nanoparticle composite according to any of (5) to (8), in which the shell further comprises at least one of Se and S.

In addition, the present invention (10) provides the core/shell type semiconductor nanoparticle composite according to any of (5) to (9), in which a quantum yield (QY) of the core/shell type semiconductor nanoparticle composite is

90.0% or more.

In addition, the present invention (11) provides the core/shell type semiconductor nanoparticle composite according to any of (5) to (10), in which a ratio of the carboxylic acid in all ligands that are coordinated to the core/shell type semiconductor nanoparticle composite is in the range of 1.0 to 15.0% by mass.

Advantageous Effect of Invention

The present invention provides a method for producing a semiconductor nanoparticle that can simply produce a semiconductor nanoparticle having a core/shell type structure that has excellent optical properties in the case where two or more types of shell precursors are used to produce the semiconductor nanoparticle having a core/shell type structure.

DESCRIPTION OF EMBODIMENTS

A method for producing the core/shell type semiconductor nanoparticle according to the present invention comprising a shell forming process at which a raw material zinc carboxylate salt and a group VI element precursor are added to a core particle dispersion solution to cause a reaction between the raw material zinc carboxylate salt and the group VI element precursor in the presence of the core particle to form a shell that includes zinc and a group VI element on a surface of the core particle (hereinafter, this process is also referred to as the shell-forming process (1)), in which

a ratio of carboxylic acids having 8 to 10 carbon atoms in whole of carboxylic acids that form the raw material zinc carboxylate salt is 80% by mass or more, and
an average branching degree of the whole of the carboxylic acids that form the raw material zinc carboxylate salt is in the range of 1.1 to 2.9.

Hereinafter, the numerical range includes both ends unless otherwise specifically noted. In other words, the range of xx to yy means xx or more and yy or less.

The method for producing the core/shell type semiconductor nanoparticle according to the present invention has the shell-forming process (1). The shell-forming process (1) is the process at which at least a raw material zinc carboxylate salt and a group VI element precursor are added to a core particle dispersion solution to form a shell that includes zinc and a group VI element on a surface of a core particle by reacting the raw material zinc carboxylate salt with the group VI element precursor in the presence of the core particle.

At the shell-forming process (1), there is no particular restriction on the core particle on which a shell layer is formed as far as the particle is a particle that can be used as the core particle for the core/shell type semiconductor nanoparticle. Here, the core particle comprising In and P is preferable, and the core particle comprising In, P, and a halogen is especially preferable. It is preferable for the core particle to comprise In and P from the viewpoint of obtaining the semiconductor nanoparticle imposing a low environmental burden and having excellent optical properties. It is preferable that the core particle includes a halogen because it can improve the optical properties of the core particle and the semiconductor nanoparticle. The halogen that can be included in the core particle is F, Cl, Br, or I. Among these halogens, Cl and Br are preferable in view of a narrower full width at half maximum. The core particle may also include other elements such as Ga, Al, Zn, N, S, Si, and Ge.

The Cd content in the core particle is 100 ppm by mass or less, preferably 80 ppm by mass or less, and especially preferably 50 ppm by mass or less.

There is no particular restriction on the average diameter of the core particle; but it is preferable in the range of 1.0 nm to 5.0 nm. The average particle diameter of the core particle in the above range can make it possible to convert the excitation light of 450 nm into a green to red luminescence. In the present invention, the average particle diameter of the core particle is determined by calculating the area circular equivalent diameter (Heywood diameter) of 10 or more particles on a particle image observed by a transmission electron microscopy (TEM).

There is no particular restriction on the method for synthesizing the core particle; therefore, the method is chosen as appropriate. In the present invention, an In precursor, a P precursor, and a halogen precursor are as follows.

There is no particular restriction on the In precursor. Illustrative examples thereof include indium carboxylates such as indium acetate, indium propionate, indium myristate, and indium oleate; indium halides such as indium fluoride, indium bromide, and indium iodide; indium thiolate; and a trialkylindium.

There is no particular restriction on the P precursor. Illustrative examples thereof include tris(trimethylsilyl) phosphine, tris(trimethylgermyl)phosphine, tris(dimethylamino)phosphine, tris(diethylamino)phosphine, tris(dioctylamino)phosphine, a trialkyl phosphine, and a $PH_3$ gas. When tris(trimethylsilyl)phosphine is used as the P precursor, there is the case that Si is incorporated into the semiconductor nanoparticle, but this does not impair the action of the present invention.

There is no particular restriction on the halogen precursor. Illustrative examples thereof include: HF, HCl, HBr,

and HI; carboxylic acid halides such as oleyl chloride, oleyl bromide, octanoyl chloride, octanoyl bromide, and oleoyl chloride; and metal halides such as zinc chloride, indium chloride, and gallium chloride.

The following methods are used to synthesize the core particle comprising In and P. It should be noted, however, that the following methods of synthesizing the core particle are mere examples; and thus, the core particles are not limited to those synthesized by the following synthesis methods. The core particle may be synthesized, for example, by reacting an In precursor with a P precursor. First, an In precursor and a solvent are mixed, and the resulting In precursor solution, added with a dispersant and/or an additive as needed, is mixed under vacuum or a nitrogen atmosphere. After this is once heated at 100 to 300°C for a period of 6 to 24 hours, a P precursor is added, which is followed by heating at 200 to 400°C for a period of a few seconds (for example, 2 or 3 seconds) to 60 minutes, and then, cooling; and with this, the core particle dispersion solution in which the core particles are dispersed can be obtained. Next, a halogen precursor is added to the core particle dispersion solution, and then, the resulting mixture is heated at 25 to 350°C for a period of a few seconds (for example, 2 or 3 seconds) to 60 minutes, and then this is cooled to obtain a halogen-doped core particle dispersion solution having the halogen partially on the surface of the core particle.

There is no particular restriction on the dispersant for this. Illustrative examples thereof include a carboxylic acid, an amine, a thiol, a phosphine, a phosphine oxide, a phosphine, and a phosphonic acid. The dispersant can also serve as a solvent. There is no particular restriction on the solvent. Illustrative examples thereof include 1-octadecene, hexadecane, squalane, oleylamine, trioctylphosphine, and trioctylphosphine oxide. Illustrative examples of the additive include a S precursor, a Zn precursor, and a halogen precursor, those having been described above.

The core particle dispersion solution for the shell-forming process (1) is the dispersion solution in which the core particles are dispersed in a dispersing medium. There is no particular restriction on the dispersing medium in which the core particles are dispersed. Illustrative examples thereof include 1-octadecene, hexadecane, squalane, squalene, mineral spirit, liquid paraffin, trioctylamine, trioctylphosphine, trioctylphosphine oxide, toluene, hexane, and diphenyl ether. These may be used singly or in a combination of two or more of them, and preferably at least one medium selected from the group consisting of 1-octadecene, hexadecane, squalane, squalene, mineral spirit, and liquid paraffin.

The raw material zinc carboxylate for the shell-forming process (1) is the zinc precursor that is added to the core particle dispersion solution, whereby reacting with the VI element precursor at the shell-forming process (1).

Of the whole of the carboxylic acids that form the raw material zinc carboxylate salt, the ratio of the carboxylic acids having 8 to 10 carbon atoms is 80.0% by mass or more, preferably 85.0% by mass or more, more preferably 90.0% by mass or more, and especially preferably 100.0% by mass. In other words, the ratio of the carboxylic acids having 8 to 10 carbon atoms occupying the whole of the carboxylic acids that form the raw material zinc carboxylate salt is 80.0% by mass or more, preferably 85.0% by mass or more, more preferably 90.0% by mass or more, and especially preferably 100.0% by mass. The semiconductor nanoparticle having excellent optical properties can be obtained when the ratio of the carboxylic acids having 8 to 10 carbon atoms in whole of the carboxylic acids that form the raw material zinc carboxylate salt is within the above range.

Illustrative examples of the carboxylic acid having 8 to 10 carbon atoms include octanoic acid, 2-ethylhexanoic acid, isooctanoic acid, nonanoic acid, isononanoic acid, neononanoic acid, decanoic acid, isodecanoic acid, and neodecanoic acid. These carboxylic acids are used singly or in a combination of two or more of them so as to achieve a predetermined average branching degree. It is desirable to use a combination of two or more carboxylic acids, in which 2-ethylhexanoic acid, isononanoic acid, or neodecanoic acid is included as the main component therein.

In the present invention, the ratio of the carboxylic acids having 8 to 10 carbon atoms in whole of the carboxylic acids that form the raw material zinc carboxylate salt is measured by a gas chromatography, a liquid chromatography-mass spectrometry, or other methods in terms of the types and amounts of the carboxylic acids; and the ratio is calculated on the basis of these measurement results. For example, when analyzing each carboxylic acid (in the case that the carboxylic acid that forms the raw material zinc carboxylate salt is composed of two or more carboxylic acids, a mixture of these carboxylic acids), that is, when analyzing each carboxylic acid before reacting with a zinc compound to form the raw material zinc carboxylate salt (in the case that the carboxylic acid that forms the raw material zinc carboxylate salt is composed of two or more carboxylic acids, a mixture of those carboxylic acids) by a gas chromatography, a portion of the carboxylic acid is collected and methyl esterified, introduced into a gas chromatography instrument, heated to 350°C or higher, and passed through a column with a carrier gas to identify and determine the type and amount of the carboxylic acid from the retention time and peak area of the signal, obtained by a detector, and from the results, the ratio of the carboxylic acids having 8 to 10 carbon atoms in whole of the carboxylic acids that form the raw material zinc carboxylate salt can be calculated. Also, for example, a portion of the raw material zinc carboxylate salt before being added to the core particle dispersion solution is collected, and a strong acid such as hydrochloric acid or nitric acid is added to separate the carboxylic acids, followed by methyl esterification, and then this is introduced into a sample evaporation chamber of a gas chromatography instrument, heated to 350°C or higher, and passed through a column with a carrier gas. Thereafter, the types and amounts of the carboxylic acids are identified and determined from the retention times and peak areas of the signals obtained by the detector, and from the results, the ratio of the carboxylic acids having 8 to 10 carbon atoms in whole of the carboxylic acids that form the raw material zinc carboxylate zinc salt can be calculated.

The average branching degree of the whole of the carboxylic acids that form the raw material zinc carboxylate salt is in the range of 1.1 to 2.9, preferably in the range of 1.3 to 2.7, and especially preferably in the range of 1.5 to 2.5. In other words, the average branching degree, upon measuring the whole of the carboxylic acids that form the raw material zinc carboxylate salt, is in the range of 1.1 to 2.9, preferably in the range of 1.3 to 2.7, and especially preferably in the range of 1.5 to 2.5. When the average branching degree of the whole of the carboxylic acids that form the raw material zinc carboxylate salt is within the above range, a high solubility in an organic hydrocarbon solvent and an improved workability can be realized, and in addition, the semiconductor nanoparticle having excellent optical properties can be obtained by using the zinc carboxylate salt according to the present invention as the Zn precursor during production of the semiconductor nanoparticle. The reason for this is probably because when the average branching degree is within the above range, the zinc carboxylate salt has a certain bulkiness, thereby reacting with other shell-forming precursors on the surface of the core particle.

In the present invention, the average branching degree of the whole of the carboxylic acids that form the raw material zinc carboxylate salt means the degree of branching the alkyl group from the main chain of these carboxylic acids. First, the measurement sample is analyzed by a gas chromatography or other means, and then the average molecular weight of the carboxylic acids (14n+32) is calculated from the composition ratio obtained. The measurement sample is analyzed by $^1$H-NMR, and from the NMR chart obtained, the integral of the chemical shift indicating the hydrogen of all the alkyl chains of the carboxylic acid is taken as 2n-1, and the integral of the chemical shift $\delta$ in the range of 0.7 to 1.1 ppm indicating the hydrogen of the primary carbon is divided by 3 to obtain the number of methyl groups in that carboxylic acid. The branching degree is calculated by subtracting 1, the number of terminal methyl groups in the main chain structure, from the number of methyl groups obtained. For example, a portion of the raw material carboxylic acid (in the case that the carboxylic acid that forms the raw material zinc carboxylate salt is composed of two or more carboxylic acids, a mixture of those carboxylic acids) for making the raw material zinc carboxylate salt, that is, the carboxylic acid (in the case that the carboxylic acid that forms the raw material zinc carboxylate salt is composed of two or more carboxylic acids, a mixture of those carboxylic acids) before reacting with a zinc compound to form the raw material zinc carboxylate salt, is collected and analyzed by $^1$H-NMR; then the calculation is made by subtracting 1, the number of terminal methyl groups in the main chain structure, from the number of methyl groups obtained from the obtained NMR chart. For example, a portion of the raw material zinc carboxylate salt before adding it to the core particle dispersion solution is taken and added with a strong acid such as hydrochloric acid or nitric acid to separate the carboxylic acid for manufacturing the raw material; then, this is analyzed by $^1$H-NMR, and the calculation is made by subtracting 1, the number of terminal methyl groups in the main chain structure, from the number of methyl groups obtained from the obtained NMR chart.

The raw material zinc carboxylate salt is obtained by the reaction of a carboxylic acid with a zinc raw material. The zinc carboxylate salt is generally formed by the method called a direct method or a double decomposition method. In the present invention, either method may be used. The direct method is the method in which a molten carboxylic acid is caused to directly react with a metal oxide or a metal hydroxide to obtain a metal carboxylate salt. On the other hand, the double decomposition method is to obtain a metal carboxylate salt by reacting an aqueous solution of an alkali metal salt of a carboxylic acid with an inorganic metal salt. The raw material zinc carboxylate salt may be formed by any of the direct method and the double decomposition method; but in view of mixing a smaller amount of water into the zinc carboxylate salt, the zinc carboxylate salt formed by the direct method is more preferable.

When preparing the zinc salt with two or more carboxylic acids, the salt may be prepared after previously mixing the carboxylic acids having known degrees of branching so as to adjust the branching degree before preparation, or the salt may be prepared by mixing the salts after preparation of the zinc carboxylate so as to adjust the branching degree. From the production viewpoint, mixing the carboxylic acids in advance is preferable. The zinc carboxylate salt may also be produced in a solvent that is used to produce the semiconductor nanoparticle.

The group VI element precursor to be added to the core particle dispersion solution at the shell-forming process (1), namely, the group VI element precursor to be reacted with the zinc precursor, is a Se precursor, a S precursor, or a Te precursor. The group VI element precursor may be one kind alone or a combination of two or more kinds; but it is preferable to include at least a Se precursor. In other words, the group VI element precursor to be reacted with the zinc precursor may be a precursor of any one of the VI elements, such as a Se precursor alone, or a combination of two or more VI elements, such as a Se precursor and a S precursor, a Se precursor and a Te precursor, a Se precursor, a S precursor, and a Te precursor, among other combinations.

At the shell-forming process (1), there is no particular restriction on the Se precursor. Illustrative examples thereof include a trialkylphosphine selenide and selenol. A trialkylphosphine selenide is preferable as the Se precursor. The Se precursor may be one kind alone or a combination of two or more kinds.

At the shell-forming process (1), there is no particular restriction on the S precursor. Illustrative examples thereof include: trialkylphosphine sulfides such as trioctylphosphine sulfide and tributylphosphine sulfide; a thiol; and bis(trimethylsilyl)sulfide. Trioctylphosphine sulfide is preferable as the S precursor. The S precursor may be one kind alone or a combination of two or more kinds.

At the shell-forming process (1), there is no particular restriction on the Te precursor. Illustrative examples thereof

include trioctylphosphine telluride. Trioctylphosphine telluride is preferable as the Te precursor. The Te precursor may be one kind alone or a combination of two or more kinds.

At the shell-forming process (1), when only the Se precursor is used as the Group VI element precursor, a shell layer including zinc and Se is formed, and when Se and S precursors are used together, a shell layer including zinc, Se, and S is formed. When Se and Te precursors are used together, a shell layer including zinc, Se, and Te is formed. When Se, S, and Te precursors are used together, a shell layer including zinc, Se, S, and Te is formed.

There is no particular restriction on the method in which at the shell-forming process (1), the raw material zinc carboxylate salt and the group VI element precursor are added to the core particle dispersion solution to form the shell that includes zinc and the group VI element on the surface of the core particle by reacting the raw material zinc carboxylate salt with the group VI element precursor in the presence of the core particle. Any method may be used as long as both the raw material zinc carboxylate salt and the group VI element precursor are added to the core particle dispersion solution, thereby causing the reaction of the raw material zinc carboxylate salt with the group VI element precursor in the presence of the core particle.

At the shell-forming process (1), the raw material zinc carboxylate salt and the group VI element precursor are added to the core particle dispersion solution, which is then followed by the reaction between the raw material zinc carboxylate salt and the group VI element precursor in the presence of the core particle to form a shell that includes zinc and a group VI element on the surface of the core particle.

When the raw material zinc carboxylate salt and the group VI element precursor are added to the core particle dispersion solution at the shell-forming process (1), the temperature of the core particle dispersion solution is chosen as appropriate from the range of 180 to 320°C. When the temperature of the core particle dispersion solution upon reacting the raw material zinc carboxylate salt with the group VI element precursor is within the above range, the added raw material zinc carboxylate salt and the group VI element precursor can form on the core particle the shell that is unlikely to cause the non-emission recombination of excitons through the defect level; thus, the core/shell type semiconductor nanoparticle having excellent optical properties can be obtained.

When adding the raw material zinc carboxylate salt into the core particle dispersion solution at the shell-forming process (1), the addition time is chosen as appropriate from the range of 5 to 600 minutes. When the addition time of the solution of the raw material zinc carboxylate salt or the raw material zinc carboxylate salt and the solution of the group VI element precursor to the core particle dispersion solution is within the above range, the added shell precursors can efficiently form the shell on the surface of the core particle.

The addition time for adding the group VI element precursor to the core particle dispersion at the shell-forming process (1) is appropriately chosen from the range of 5 to 600 minutes. When the addition time of the solution of the group VI element precursor or the solution of the group VI element precursor to the core particle dispersion solution is within the above range, the added shell precursor can efficiently form the shell on the surface of the core particle.

At the shell-forming process (1), the reaction between the raw material zinc carboxylate salt and the group VI element precursor can be conducted in the presence of a dispersant. Illustrative examples of the dispersant to be present in the core particle dispersion solution include: amines such as oleylamine and trioctylamine; carboxylic acids such as oleic acid; and thiols such as dodecanethiol. The amount of the dispersant used is chosen as appropriate. The amount thereof in terms of the mole ratio to In in the core particle is preferably in the range of 5 to 200, and the amount in terms of the mole ratio to In in the core particle is more preferably in the range of 10 to 100.

At the shell-forming process (1), the reaction of the raw material zinc carboxylate salt with the group VI element precursor may be conducted in the presence of a halogen precursor. There is no particular restriction on the halogen precursor. Illustrative examples thereof include HF, HCl, HBr, and HI; carboxylic acid halides such oleyl chloride, oleyl bromide, octanoyl chloride, and octanoyl bromide; and metal halides such as zinc chloride, indium chloride, and gallium chloride. The amount of the halogen used is chosen as appropriate; the amount in terms of the mole ratio to In in the core particle is preferably in the range of 0.3 to 100.0, and the amount in terms of the mole ratio to In in the core particle is more preferably in the range of 0.3 to 30.0. At the shell-forming process (1), when the halogen precursor is made present in the core particle dispersion solution, the core/shell type semiconductor nanoparticle having the halogen on the surface of the core particle or in the shell layer thereof can be obtained.

At the shell-forming process (1), the reaction between the raw material zinc carboxylate salt and the group VI element precursor may be conducted in the presence of, in addition to the above substances, a carboxylic acid, an amine, a thiol, a phosphine, a phosphine oxide, a phosphine, a phosphonic acid, or the like, as needed.

In the method for producing the core/shell type semiconductor nanoparticle according to the present invention, the core particle obtained after synthesis of the core particle may be used as the core particle for the shell-forming process (1) without being purified. Namely, the core particle that has not gone through a purification process may be used as the core particle for the shell-forming process (1). In other words, the reaction solution in which the core particles are dispersed after the synthesis of the core particles may be used as the core particle dispersion solution for the shell-forming process (1). At the shell-forming process (1), the zinc salt of the carboxylic acids having a specific carbon number and a specific branching degree is used as the zinc precursor to form the shell layer. The inventors of the present invention presume that

the zinc carboxylate salt and the group VI element precursor can readily react on the surface of the core particle, making it difficult for impurities in the dispersing medium to be incorporated into the shell layer at the time of formation of the shell and making it possible to form the shell having the defect level suppressed on the core surface. Therefore, the core particle that has not gone through the purification process can be used as the core particle for the shell-forming process (1).

The method for producing the core/shell type semiconductor nanoparticle according to the present invention is simple, because in order to form the shell layer at the shell-forming process (1), what is required is only one-time addition of all the quantities of the raw material zinc carboxylate salt and the group VI element precursor to be used to form the shell to the core particle dispersion solution. In the method for producing the core/shell type semiconductor nanoparticle according to the present invention, the raw material zinc carboxylate, which is the zinc salt of the carboxylic acids having a specific carbon number and a specific branching degree, is used as the group II element precursor to be added to the core particle dispersion solution so as to be reacted with the group VI element precursor on the surface of the core particle; with this, the core/shell type semiconductor nanoparticle having excellent optical properties can be obtained even if the group II element precursor and the group VI element precursor are not brought into contact with the core particle separately and alternately multiple times, in other words, even if all the group II element precursor and the group VI element precursor are brought into contact and reacted with the core particle at a time. In particular, the method for producing the core/shell type semiconductor nanoparticle according to the present invention is highly effective to obtain the core/shell type semiconductor nanoparticle having excellent optical properties, even if all the quantities of the group II element precursor and the group VI element precursor are brought into contact and reacted with the core particle at a time at the shell-forming process (1).

In the method for producing the core/shell type semiconductor nanoparticle according to the present invention, at the shell-forming process (1), the group VI element precursor and the raw material zinc carboxylate salt are added to the core particle dispersion solution to cause the raw material zinc carboxylate salt to react with the group VI element precursor. In addition, the ratio of the carboxylic acids having 8 to 10 carbon atoms in whole of the carboxylic acids that form the raw material zinc carboxylate salt is made 80.0% by mass or more, preferably 85.0% by mass or more, more preferably 90.0% by mass or more, and especially preferably 100.0% by mass, and the average branching degree of the whole of the carboxylic acids that form the raw material zinc carboxylate salt is made in the range of 1.1 to 2.9, preferably in the range of 1.3 to 2.7, and especially preferably in the range of 1.5 to 2.5. With these, the core/shell type semiconductor nanoparticle having a small full width at half maximum (FWHM) and a high quantum yield (QY) can be obtained.

In general, in the production of the core/shell type semiconductor nanoparticle, the core/shell type semiconductor nanoparticle for red emission with the emission peak wavelength $\lambda_{max}$ of 590 to 650 nm has a larger particle size than that of the core/shell type semiconductor nanoparticle for green emission with the emission peak wavelength $\lambda_{max}$ of 500 to 560 nm; thus, it is difficult to obtain the core/shell type semiconductor nanoparticle having a small full width at half maximum (FWHM) and a high quantum yield (QY).

In the method for producing the core/shell type semiconductor nanoparticle according to the present invention, at the shell forming process (1), the group VI element precursor and the raw material zinc carboxylate salt are added to the core particle dispersion solution to cause the raw material zinc carboxylate salt to react with the group VI element precursor. In addition, the ratio of the carboxylic acids having 8 to 10 carbon atoms in whole of the carboxylic acids that form the raw material zinc carboxylate salt is made 80.0% by mass or more, preferably 85.0% by mass or more, more preferably 90.0% by mass or more, and especially preferably 100.0% by mass, and the average branching degree of the whole of the carboxylic acids that form the raw material zinc carboxylate salt is made in the range of 1.1 to 2.9, preferably in the range of 1.3 to 2.7, and especially preferably in the range of 1.5 to 2.5. With these, the core/shell type semiconductor nanoparticle having a small full width at half maximum (FWHM) and a high quantum yield (QY) can be obtained also in the production of the core/shell type semiconductor nanoparticle for red emission with the emission peak wavelength $\lambda_{max}$ of 590 to 650 nm. Although the mechanism for this is not yet clear, the inventors of the present invention presume that the zinc salt of the carboxylic acids having a specific carbon number and a specific branching degree is readily present on the surface of the core particle of the semiconductor nanoparticle, and whereby the reaction of the zinc salt of the carboxylic acids having a specific carbon number and a specific branching degree present on the surface of the core particle with the group VI element precursor results in formation of the II-VI group shell having generation of the defect level on the surface of the core particle suppressed.

In the method for producing the core/shell type semiconductor nanoparticle according to the present invention, after conducting the shell-forming process (1), the generated particle having the core/shell type structure may be obtained as the target product of the core/shell type semiconductor particle, or, furthermore, using the generated core/shell type particle, the core/shell type semiconductor nanoparticle having two or more shell layers may be obtained by conducting the shell-forming process one or two or more times. In other words, the method for producing the core/shell type semiconductor nanoparticle according to the present invention may have, in addition to the shell-forming process (1), one or two or more shell-forming processes to form the shell on the core/shell type particle that includes zinc and a group VI element obtained by conducting the shell-forming process (1). The shell-forming process, which is conducted one or two or more times, is the same as the shell-forming process (1) described above. In other words, the shell-forming process may be

conducted in the same way as the shell-forming process (1), except that the core/shell type particle having one or more shell layers formed on the surface of the core particle is used in place of the core particle. The shell-forming process that is conducted one or two or more times may be a method other than the method similar to the above shell-forming process (1).

As for the method for producing the core/shell type semiconductor nanoparticle having two shell layers formed on the surface of the core particle, a method for producing the core/shell type semiconductor nanoparticle may be mentioned, in which the method has the shell-forming process (1) and a shell-forming process (2) at which the raw material zinc carboxylate salt and the group VI element precursor are added to the dispersion solution of "particles composed of the core particle and one shell layer formed on the surface of the core particle" obtained by conducting the shell-forming process (1) to form a shell that includes zinc and the group VI element on the surface of the "particles composed of the core particle and one shell layer formed on the surface of the core particle."

In the method for producing the core/shell type semiconductor nanoparticle according to the present invention, in the case where the shell-forming process is conducted one or two or more times after the shell-forming process (1) above is conducted, at the shell-forming process (1), the carboxylic acid having a branched chain derived from the raw material zinc carboxylate salt used as the zinc precursor is coordinated to the surface of the core/shell type semiconductor nanoparticle obtained by the method for producing the core/shell type semiconductor nanoparticle according to the present invention. The carboxylic acid having the branched chain that is coordinated to the surface of the core/shell type semiconductor nanoparticle acts as the ligand that enhances the dispersibility of the core/shell type semiconductor nanoparticle into a dispersing medium.

In addition, as for the method for producing the core/shell type semiconductor nanoparticle having (n+1) shell layers formed on the surface of the core particle, a method for producing the core/shell type semiconductor nanoparticle may be mentioned, in which the method has the shell-forming process (1) and a process at which a shell-forming process (x) is repeated n times at which the raw material zinc carboxylate salt and the group VI element precursor are added to the dispersion solution of "particles composed of the core particle and one or more shell layers formed on the surface of the core particle" obtained by conducting the shell-forming process above to form the shell that includes zinc and the group VI element on the surface of the "particles composed of the core particle and one or more shell layers formed on the surface of the core particle."

In the method for producing the core/shell type semiconductor nanoparticle according to the present invention, in the case where the shell-forming process (x) is repeatedly conducted one or two or more times after the shell-forming process (1) above is conducted, in the shell-forming process (1) and the shell-forming process (x), the carboxylic acid derived from the raw material zinc carboxylate salt used as the zinc precursor is coordinated to the surface of the core/shell type semiconductor nanoparticle obtained by the method for producing the core/shell type semiconductor nanoparticle according to the present invention. The carboxylic acid that is coordinated to the surface of the core/shell type semiconductor nanoparticle acts as the ligand that enhances the dispersibility of the core/shell type semiconductor nanoparticle into the dispersion solution.

In the method for producing the core/shell type semiconductor nanoparticle according to the present invention, the core/shell type semiconductor nanoparticle produced by conducting the shell-forming process may be purified. For example, the core/shell type semiconductor nanoparticle can be deposited from the solution by adding a polarity-converting solvent such as acetone. Then, the deposited core/shell type semiconductor nanoparticle may be recovered by filtration or centrifugal separation. The filtrate or supernatant solution including unreacted starting materials and other impurities may be reused. Then, the recovered semiconductor nanoparticles may be washed with an additional solvent and dissolved again. This purification operation may be repeated, for example, two to four times, or until the desired purity is reached. Other purification methods include, for example, coagulation, liquid-liquid extraction, distillation, electro-deposition, size exclusion chromatography, and ultrafiltration. In purification, these purification methods may be used singly or in a combination of a plurality of them.

Furthermore, the surface of the core/shell type semiconductor nanoparticle obtained as described above may be modified with a ligand. Known methods of modification with a ligand, such as a ligand-exchange method, may be used.

The core/shell type semiconductor nanoparticle obtained by the method for producing the core/shell type semiconductor nanoparticle according to the present invention is the particle having the core/shell type structure that has at least one shell layer. In the core/shell type semiconductor nanoparticle obtained by the method for producing the core/shell type semiconductor nanoparticle according to the present invention, the shell layer formed on the surface of the core particle, i.e., the first shell layer viewed from the core particle side, is the shell layer formed by conducting the shell-forming process (1). In the core/shell type semiconductor nanoparticle obtained by the method for producing the core/shell type semiconductor nanoparticle according to the present invention, the number of shell layers formed is at least one, and preferably one to four layers. In the case where the core/shell type semiconductor nanoparticle obtained by the method for producing the core/shell type semiconductor nanoparticle according to the present invention has two or more shell layers, any method may be used to form the second and subsequent shell layers viewed from the core particle; but the shell-forming method similar to the shell-forming process (1) is preferable, except that in place of the core particle, the core/shell type particle having one or more shell layers formed at the previous shell-forming process is used as the formation target of

the shell layer.

In the core/shell type semiconductor nanoparticle obtained by the method for producing the core/shell type semiconductor nanoparticle according to the present invention, the core that comprises In and P is preferable from the viewpoint of obtaining the semiconductor nanoparticle imposing a low environmental burden and having excellent optical properties.

There is no particular restriction on the average particle size of the core/shell type semiconductor nanoparticle obtained by the method for producing the core/shell type semiconductor nanoparticle according to the present invention; but, this is preferably in the range of 1.0 to 20.0 nm, and especially preferably in the range of 1.0 to 10.0 nm.

The core/shell type semiconductor nanoparticle obtained by the method for producing the core/shell type semiconductor nanoparticle according to the present invention has, as a ligand, at least the carboxylic acid that formed the raw material zinc carboxylate salt is coordinated to the core/shell type semiconductor nanoparticle; and in the case where the core/shell type semiconductor nanoparticle is modified by a ligand, a ligand other than the carboxylic acid derived from the raw material zinc carboxylate salt may be coordinated to the core/shell type semiconductor nanoparticle. Thus, the core/shell type semiconductor nanoparticle obtained by the method for producing the core/shell type semiconductor nanoparticle according to the present invention is a core/shell type semiconductor nanoparticle composite having the core/shell type semiconductor nanoparticle and a ligand that is coordinated to the surface of the core/shell type semiconductor nanoparticle, in which at least the carboxylic acid derived from the raw material zinc carboxylate salt is included as the ligand. In addition, the core/shell type semiconductor nanoparticle obtained by the method for producing the core/shell type semiconductor nanoparticle according to the present invention includes at least zinc and selenium in the shell thereof.

That is, the core/shell type semiconductor nanoparticle composite according to the present invention comprises a core/shell type semiconductor nanoparticle and a ligand that is coordinated to a surface of the core/shell type semiconductor nanoparticle, in which

the shell comprises at least Zn,
the ligand comprises a carboxylic acid,
a ratio of carboxylic acids having 8 to 10 carbon atoms in whole of carboxylic acids that are included as the ligand is 80.0% by mass or more, and
an average branching degree of the whole of the carboxylic acids that are included as the ligand is in the range of 1.1 to 2.9. In addition, the shell of the core/shell type semiconductor nanoparticle composite according to the present invention may comprise at least one of Se and S.

The core/shell type semiconductor nanoparticle composite according to the present invention includes at least a carboxylic acid as the ligand. In the core/shell type semiconductor nanoparticle composite according to the present invention, a ratio of the carboxylic acids having 8 to 10 carbon atoms in whole of the carboxylic acids included as the ligand is 80.0% by mass or more, preferably 85.0% by mass or more, more preferably 90.0% by mass or more, and especially preferably 100.0% by mass. In the core/shell type semiconductor nanoparticle composite according to the present invention, an average branching degree in whole of the carboxylic acids included as the ligand is in the range of 1.1 to 2.9, preferably in the range of 1.3 to 2.7, and especially preferably in the range of 1.5 to 2.5.

In the core/shell type semiconductor nanoparticle composite according to the present invention, a ratio of the carboxylic acid in all ligands that are coordinated to the core/shell type semiconductor nanoparticle composite is preferably in the range of 1.0 to 15.0% by mass, and especially preferably in the range of 1.0 to 8.0% by mass.

In the core/shell type semiconductor nanoparticle composite according to the present invention, the shell precursors readily react on the surface of the core particle at the shell-forming process (1), so that a shell having generation of the defect level suppressed is formed on the core surface. Therefore, the full width at half maximum (FWHM) of the emission spectrum of the core/shell type semiconductor nanoparticle composite according to the present invention is preferably 37.0 nm or less, and especially preferably 35.0 nm or less. The quantum yield (QY) of the core/shell type semiconductor nanoparticle composite according to the present invention is preferably 90.0% or more, and especially preferably 93.0% or more.

The core/shell type semiconductor nanoparticle relating to the core/shell type semiconductor nanoparticle composite according to the present invention, i.e., the core/shell type semiconductor nanoparticle to which the ligand is coordinated, is the particle having a core/shell type structure that has at least one shell layer. In the core/shell type semiconductor nanoparticle relating to the core/shell type semiconductor nanoparticle composite according to the present invention, the shell layer that is formed on the surface of the core particle, i.e., the first shell layer viewed from the core particle side, includes at least Zn and a group VI element (preferably Se or S). In the core/shell type semiconductor nanoparticle relating to the core/shell type semiconductor nanoparticle composite according to the present invention, the number of shell layers formed is at least one, and preferably one to four layers. In the case where the core/shell type semiconductor nanoparticle relating to the core/shell type semiconductor nanoparticle composite according to the present

invention has two or more shell layers, the second and subsequent shell layers viewed from the core particle, include preferably Zn and a group VI element, and especially preferably Zn and Se or S.

In the core/shell type semiconductor nanoparticle relating to the core/shell type semiconductor nanoparticle composite according to the present invention, the core that comprises In and P is preferable from the viewpoint of obtaining the semiconductor nanoparticle imposing a low environmental burden and having excellent optical properties.

<Measurement>

Elemental analysis of the semiconductor nanoparticle may be conducted using a high-frequency inductively coupled plasma emission spectrometer (ICP) or an X-ray fluorescence spectrometer (XRF). In the ICP measurement, purified semiconductor nanoparticles are dissolved in nitric acid, heated, diluted with water, and measured by means of the calibration curve method using an ICP emission spectrometer (ICPS-8100; manufactured by Shimadzu Corp.). In the XRF measurement, a sample having the dispersion solution impregnated in a filter paper is placed in a sampling holder to carry out the quantitative analysis using an X-ray fluorescence spectrometer (ZSX100e; manufactured by Rigaku Corp.).

The optical identification of the semiconductor nanoparticle may be carried out by measuring with a fluorescence quantum yield measurement system (QE-2100; manufactured by Otsuka Electronics Co., Ltd.) and a visible-ultraviolet spectrophotometer (V-670; manufactured by JASCO Corp.). The emission spectrum is obtained by irradiating an excitation light to a dispersion solution of the semiconductor nanoparticles in a dispersing medium. The peak wavelength ($\lambda_{max}$), the fluorescence quantum yield (QY), and the full width at half maximum (FWHM) are calculated from the re-excitation-corrected emission spectrum obtained by excluding the re-excited fluorescence emission spectrum that is fluorescence-emitted by re-excitation from the fluorescence spectrum obtained as described above. Illustrative examples of the dispersing medium include normal hexane, octadecene, toluene, acetone, and PGMEA. The excitation light used for the measurement is a single beam of 450 nm, and the dispersion solution is made of the semiconductor nanoparticle whose concentration is adjusted so as to give the absorbance of 20 to 30%. On the other hand, the absorption spectrum may be measured by irradiating UV to visible light to a dispersion solution of the semiconductor nanoparticles in a dispersing medium.

With regard to the ligand that is coordinated to the core/shell type semiconductor nanoparticle, identification of its type and calculation of its mole fraction may be done using a gas chromatography. The core/shell type semiconductor nanoparticles are introduced into a sample vaporization chamber, heated at 350°C or higher, and passed through a column with a carrier gas; with this, the type and amount of each ligand are identified and calculated from the retention time and peak area of the signal, obtained with a detector. From the obtained type and amount of each ligand, the existing type and ratio of the ligand that is coordinated to the core/shell type semiconductor nanoparticle may be identified and calculated.

The composition, method, procedure, process, and the like described in this specification are examples and thus, do not limit the present invention, so that many variations are applicable within the scope of the present invention.

The zinc carboxylate salt used in the production of the semiconductor nanoparticle according to the present invention is a zinc salt of carboxylic acids in which

a ratio of carboxylic acids having 8 to 10 carbon atoms in whole of the carboxylic acids that form the zinc salt of the carboxylic acid is 80.0% by mass or more, and
an average branching degree of the whole of the carboxylic acids that form the zinc salt of the carboxylic acid is in the range of 1.1 to 2.9.

The zinc carboxylate salt used in the production of the semiconductor nanoparticle according to the present invention is used to form a shell in the production of the core/shell type semiconductor nanoparticle. The zinc carboxylate salt used in the production of the semiconductor nanoparticle according to the present invention is a zinc salt of carboxylic acids, in which the ratio of the carboxylic acids having 8 to 10 carbon atoms in whole of the carboxylic acids that form the zinc salt of the carboxylic acid is 80.0% by mass or more, preferably 85.0% by mass or more, more preferably 90.0% by mass or more, and especially preferably 100.0% by mass, and the average branching degree of the whole of the carboxylic acids that form the zinc salt of the carboxylic acids is in the range of 1.1 to 2.9, preferably in the range of 1.3 to 2.7, and especially preferably in the range of 1.5 to 2.5.

Hereinafter, the present invention will be described based on specific experimental examples, but the present invention is not limited to these examples.

[Examples]

<Production of Zinc Carboxylate>

The zinc salt with branched carboxylic acids was prepared according to the following method. The carboxylic acids used were 3,5,5-trimethylhexanoic acid (reagent with >98.0% purity; manufactured by Tokyo Chemical Industry Co., Ltd.), neodecanoic acid (reagent manufactured by FUJIFILM Wako Pure Chemical Corp.), 2-ethylhexanoic acid (reagent wit >99.0% purity; manufactured by Tokyo Chemical Industry Co., Ltd.), and decanoic acid (NAA-102; manufactured by NOF Corp.). The analysis results of the carbon number compositions of carboxylic acids are summarized in Table 1 and the blending ratios of the carboxylic acids are summarized in Table 2.

Neodecanoic acid (158 g, 0.91 mol), 2-ethylhexanoic acid (91.8 g, 0.64 mol), and decanoic acid (47.1 g, 0.27 mol) were heated at 40°C with stirring to prepare a carboxylic acid mixture. The prepared carboxylic acid mixture and zinc oxide (58.8 g, 0.90 mol) were charged into a separable flask equipped with a water quantifying receiver; and then, they were stirred and heated to 170°C under a nitrogen atmosphere. The temperature was kept at 170°C for 2 hours after removing the generated water through the water quantifying receiver. After evacuation for 1 hour, purging with nitrogen was performed, which was then followed by cooling to room temperature (25°C) to obtain zinc carboxylate salt 1.

A carboxylic acid mixture was prepared by stirring 3,5,5-trimethylhexanoic acid (144 g, 0.91 mol) and neodecanoic acid (158 g, 0.91 mol) with heating at 40°C. The prepared carboxylic acid mixture and zinc oxide (58.8 g, 0.90 mol) were charged into a separable flask equipped with a water quantifying receiver; and then, they were stirred and heated to 170°C under a nitrogen atmosphere. The temperature was kept at 170°C for 2 hours after removing the generated water through the water quantifying receiver. After evacuation for 1 hour, purging with nitrogen was performed, which was then followed by cooling to room temperature (25°C) to obtain zinc carboxylate salt 2.

A carboxylic acid mixture was prepared by stirring 3,5,5-trimethylhexanoic acid (71.9 g, 0.45 mol) and neodecanoic acid (237 g, 1.36 mol) with heating at 40°C. The prepared carboxylic acid mixture and zinc oxide (58.8 g, 0.90 mol) were charged into a separable flask equipped with a water quantifying receiver; and then, they were stirred and heated to 170°C under a nitrogen atmosphere. The temperature was kept at 170°C for 2 hours after removing the generated water through the water quantifying receiver. After evacuation for 1 hour, purging with nitrogen was performed, which was then followed by cooling to room temperature (25°C) to obtain zinc carboxylate salt 3.

Neodecanoic acid (316 g, 1.82 mol) and zinc oxide (58.8 g, 0.90 mol) were charged into a separable flask equipped with a water quantifying receiver; and then, they were stirred and heated to 170°C under a nitrogen atmosphere. The temperature was kept at 170°C for 2 hours after removing the generated water through the water quantifying receiver. After evacuation for 1 hour, purging with nitrogen was performed and cooled to room temperature (25°C) to obtain zinc carboxylate salt 4.

Neodecanoic acid (261 g, 1.50 mol) and decanoic acid (54.6 g, 0.32 mol) were stirred with heating at 40°C to prepare the carboxylic acid mixture. The prepared carboxylic acid mixture and zinc oxide (58.8 g, 0.90 mol) were charged into a separable flask equipped with a water quantifying receiver; and then, they were stirred and heated to 170°C under a nitrogen atmosphere. The temperature was kept at 170°C for 2 hours after removing the generated water through the water quantifying receiver. After evacuation for 1 hour, purging with nitrogen was performed, which was then followed by cooling to room temperature (25°C) to obtain zinc carboxylate salt 5.

A carboxylic acid mixture was prepared by stirring 3,5,5-trimethylhexanoic acid (95.8 g, 0.61 mol), 2-ethylhexanoic acid (17.8 g, 0.12 mol), and decanoic acid (188 g, 1.09 mol) with heating at 40°C. The prepared carboxylic acid mixture and zinc oxide (58.8 g, 0.90 mol) were charged into a separable flask equipped with a water quantifying receiver; and then, they were stirred and heated to 170°C under a nitrogen atmosphere. The temperature was kept at 170°C for 2 hours after removing the generated water through the water quantifying receiver. After evacuation for 1 hour, purging with nitrogen was performed, which was then followed by cooling to room temperature (25°C) to obtain zinc carboxylate salt 6.

3,5,5-Trimethylhexanoic acid (288 g, 1.82 mol) and zinc oxide (58.8 g, 0.90 mol) were charged into a separable flask equipped with a water quantifying receiver; and then, they were stirred and heated to 170°C under a nitrogen atmosphere. The temperature was kept at 170°C for 2 hours after removing the generated water through the water quantifying receiver. After evacuation for 1 hour, purging with nitrogen was performed, which was then followed by cooling to room temperature (25°C) to obtain zinc carboxylate salt 7.

Decanoic acid (316 g, 1.82 mol) and water (2000 g) were charged into a separable flask and heated to 60°C. Next, an aqueous 48.0 wt% sodium hydroxide solution (154 g, 1.82 mol) was added, and then, the resulting mixture was stirred for 20 minutes, followed by dropwise addition of an aqueous solution of 25.0 wt% zinc sulfate (650 g, 2.00 mol) over 60 minutes. After the dropwise addition was completed, the resulting zinc carboxylate slurry was suction-filtrated and washed three times with 1000 g of water. The resulting cake was allowed to be placed in a shelf dryer at 60°C for 36 hours, and then cooled to room temperature (25°C) to obtain zinc carboxylate salt 8.

<Measurement of Zinc Carboxylate Salt>

The physical properties of the zinc carboxylate salts 1 to 8 obtained above were measured. The results are

summarized in Table 3.

(Ratio of C8 to C10 Carboxylic Acids)

The ratios of the C8 to C10 carboxylic acids (% by mass) in the zinc carboxylate salts 1 to 8 were calculated from the carbon number compositions of the carboxylic acids in Table 1 and the blending ratio of the carboxylic acids in Table 2.

(Average Branching Degree)

The average branching degree of the zinc carboxylate salts 1 to 8 was calculated from the branching degrees of the carboxylic acids in Table 1 and the blending ratios of the carboxylic acids in Table 2.

(Metal Content; Zn Content)

Each of the zinc carboxylate salts 1 to 8 was weighed (0.1 g) and heated in a porcelain crucible at 650°C for 4 hours to remove organic matters. Hydrochloric acid (1 ml) was added to the residue to dissolve it, and water was added to make it 100 ml. The metal content (Zn content) was measured by an atomic absorption spectrophotometry using this solution as the measurement sample.

(Viscosity)

The dynamic viscosity of each of the zinc carboxylate salts 1 to 8 was measured using a dynamic viscoelasticity analyzer (Modular Concept Rheometer MCR302; manufactured by Anton Paar GmbH). The zinc carboxylate was placed on a rheometer hot plate and heated to 130°C, and the temperature thereof was kept with a sample cover. The dynamic viscosity was measured when the rotation speed was swept from 1.0 rpm to 1000 rpm using a cone plate (CP25-2); and the viscosity (Pa*s) at 130°C was calculated at a rotation speed of 150 rpm. The temperature was then lowered to 50°C, and the dynamic viscosity was measured when the rotation speed was swept from 1.0 rpm to 1000 rpm in the same manner; and the viscosity (Pa*s) at 50°C was calculated at a rotation speed of 150 rpm.

(Rate of Change in Viscosity)

The rate of change in viscosity with respect to the temperature change was calculated by taking the difference between the viscosity (Pa*s) at 130°C and the viscosity (Pa*s) at 50°C, followed by dividing the difference with the viscosity (Pa*s) at 50°C and then multiplying the obtained value by 100.

Rate of change in viscosity (%) = ((viscosity (Pa*s) at 130°C - viscosity (Pa*s) at 50°C) / viscosity (Pa*s) at 50°C)) × 100

Semiconductor nanoparticles and semiconductor nanoparticle composites were prepared according to the following method, and the optical properties of the resulting semiconductor nanoparticle and semiconductor nanoparticle composites were measured.

<Synthesis of Core Particle>

Indium acetate (0.5 mmol), myristic acid (1.5 mmol), zinc myristate (0.2 mmol), and octadecene (10 mL) were charged into a two-necked flask, then the flask was evacuated and heated to 120°C under vacuum (<10 Pa). After holding for 30 minutes since when the degree of vacuum reached lower than 10 Pa, nitrogen was introduced into the flask and the flask was cooled to room temperature (25°C) to obtain an In precursor.

Tris(trimethylsilyl)phosphine was mixed with tri-n-octylphosphine so as to give a molar concentration of 0.2 M under a nitrogen atmosphere in a glove box to obtain a P precursor.

Next, 2 mL of the P precursor was charged into the In precursor at room temperature (25°C) under a nitrogen atmosphere, and then the temperature thereof was raised to 300°C at a rate of 30°C/min. After holding at 300°C for 2 min, the reaction solution was cooled to room temperature to obtain the reaction solution as a dispersion solution of InP core particles.

<Solution of Zinc Precursor>

The solution of each zinc precursor was obtained by mixing the zinc carboxylate salt listed in Table 2 with octadecene so as to give a zinc molar concentration of 0.3 M; then, this was evacuated at 100°C for 1 hour, replaced with nitrogen, and then cooled to room temperature (25°C).

<Se Precursor Solution>

A solution of a Se precursor was obtained by mixing 100 mmol of powdered selenium and 50 mL of tri-n-octylphosphine under a nitrogen atmosphere with stirring until the selenium powder was completely dissolved.

<S Precursor Solution>

A solution of an S precursor was obtained by mixing 100 mmol of powdered sulfur and 50 mL of tri-n-octylphosphine under a nitrogen atmosphere with stirring until the sulfur powder was completely dissolved.

<Production of Core/Shell Type Semiconductor Nanoparticle>

(Example 1)

To 10 mL of the dispersion solution of InP core particles (In: 0.4 mmol), 5 mL of trioctylamine was added; then, the temperature of the dispersion solution of the InP core particles was raised to 230°C. When the temperature of the dispersion solution of the InP core particles reached 230°C, 20 mL of the solution of the zinc precursor and 2.0 mL of the solution of the Se precursor described in Table 4 were added within 1 minute; then, the temperature of the dispersion solution of the InP core particles was raised to 300°C at a rate of 1°C/minute. Then, 180 minutes after the temperature of the dispersion solution of the InP core particles reached 300°C, the heating was stopped, which was then followed by cooling to room temperature (25°C) to obtain the dispersion solution of the core/shell type semiconductor nanoparticles (reaction solution).

Next, acetone was added to the resulting dispersion solution of the core/shell type semiconductor nanoparticles to agglomerate the semiconductor nanoparticles. Then, after centrifugation (4000 rpm, 10 min), the supernatant was removed, and the core/shell type semiconductor nanoparticles were redispersed in hexane. This was repeated to obtain purified core/shell type semiconductor nanoparticles.

The optical properties of the resulting core/shell type semiconductor nanoparticle were measured. The results are summarized in Table 5.

In the measurement of optical properties of the semiconductor nanoparticle, the excitation wavelength was a single wavelength of 450 nm. The same is true for the measurement of the optical properties of the following semiconductor nanoparticles.

<Production of Core/Shell/Shell Semiconductor Nanoparticle>

(Examples 2 to 7 and Comparative Examples 1 to 2)

The same procedure as in each of the above Examples or Comparative Examples was performed to obtain the dispersion solution of the core/shell semiconductor nanoparticles (reaction solution). The resulting dispersion solution of the core/shell semiconductor nanoparticles (reaction solution) was then heated to 300°C. After the temperature reached 300°C, the addition of the solution of the zinc precursor described in Table 4 to the dispersion solution of the core/shell semiconductor nanoparticles (reaction solution) was started at a rate of 0.2 mL/min with simultaneous addition of the solution of the Se precursor and the solution of the S precursor both at a rate of 0.03 mL/min. One hundred minutes after the start of the addition of the solution of the zinc precursor and the solution of the S precursor, the addition of both the solutions were terminated simultaneously (addition time: 100 min). Then, 180 minutes after the addition was over, the heating was stopped, which was then followed by cooling to room temperature (25°C) to obtain the core/shell/shell semiconductor nanoparticles. In this way, the dispersion solution thereof (reaction solution) was obtained.

Next, acetone was added to the resulting dispersion solution of the core/shell/shell semiconductor nanoparticles to agglomerate the semiconductor nanoparticles. Then, after centrifugation (4000 rpm, 10 min), the supernatant was removed and the core/shell/shell semiconductor nanoparticles were redispersed in hexane. This was repeated to obtain purified core/shell/shell semiconductor nanoparticles.

The optical properties of the resulting core/shell/shell semiconductor nanoparticle were measured. The results are summarized in Table 5.

[Table 1]

| Carboxylic acid: reagent/product name | Symbol | C8 (% by mass) | C9 (% by mass) | C10 (% by mass) | C7 or less, or C11 (% by mass) | Average branching degree |
|---|---|---|---|---|---|---|
| 3,5,5-Trimethylhexanoic acid | A | 0.6 | 98.5 | 0.5 | 0.4 | 3.1 |
| Neodecanoic acid | B | 0.0 | 0.6 | 90.9 | 8.5 | 2.3 |
| 2-Ethylhexanoic acid | C | 99.5 | 0.0 | 0.3 | 0.2 | 1.0 |
| Decanoic acid (NAA-102) | D | 0.2 | 0.0 | 99.5 | 0.3 | 0.0 |

[Table 2]

| | Blending ratio of carboxylic acids (% by mass) | | | |
|---|---|---|---|---|
| Blended carboxylic acid | A | B | C | D |
| Zinc carboxylate salt 1 | 0.0 | 50.0 | 35.0 | 15.0 |
| Zinc carboxylate salt 2 | 50.0 | 50.0 | 0.0 | 0.0 |
| Zinc carboxylate salt 3 | 25.0 | 75.0 | 0.0 | 0.0 |
| Zinc carboxylate salt 4 | 0.0 | 100.0 | 0.0 | 0.0 |
| Zinc carboxylate salt 5 | 0.0 | 82.6 | 0.0 | 17.4 |
| Zinc carboxylate salt 6 | 33.3 | 0.0 | 6.8 | 59.9 |
| Zinc carboxylate salt 7 | 100.0 | 0.0 | 0.0 | 0.0 |
| Zinc carboxylate salt 8 | 0.0 | 0.0 | 0.0 | 100.0 |

[Table 3]

| | Raio of C8 to C10 carboxylic acids (% by mass) | Average branching degree | Metal content (% by mass) | Viscosity at 130°C (Pa*s) | Viscosity at 50°C (Pa*s) | Rate of change in viscosity (%) |
|---|---|---|---|---|---|---|
| Zinc carboxylate salt 1 | 95.6 | 1.5 | 16.8 | 2.0 | 1730.0 | 99.8 |
| Zinc carboxylate salt 2 | 95.6 | 2.7 | 16.5 | 30.3 | 2120.0 | 98.6 |
| Zinc carboxylate salt 3 | 93.5 | 2.5 | 16.2 | 11.2 | 1270.0 | 99.1 |
| Zinc carboxylate salt 4 | 91.5 | 2.3 | 15.9 | 0.1 | 22.0 | 99.4 |
| Zinc carboxylate salt 5 | 92.9 | 1.9 | 15.9 | 1.5 | 402.0 | 99.6 |
| Zinc carboxylate salt 6 | 99.7 | 1.1 | 16.5 | 2.7 | 9080.0 | 100.0 |
| Zinc carboxylate salt 7 | 99.6 | 3.1 | 17.2 | 11.6 | 120.0 | 90.3 |
| Zinc carboxylate salt 8 | 99.7 | 0.0 | 16.0 | 14400.0 | 10400.0 | 11.1 |

[Table 4]

| | Zinc precursor | | Solvent | Group VI | Other additive | Addition ratio Zn/In Mole ratio | Addition time (minutes) | Before addition Temperature (°C) | Reaction Temperature (°C) | Reactio Time (minute |
|---|---|---|---|---|---|---|---|---|---|---|
| | Zinc carboxylate salt | Average branching degree | | | | | | | | |
| Example 1 | Zinc carboxy-late salt 1 | 1.5 | Octadecene | Se | Oleoyl chloride | 15 | 50 | 230 | 300 | 180 |
| Example 2 | Zinc carboxy-late salt 2 | 2.7 | Octadecene | Se, S | Oleoyl chloride | 15 | 50 | 230 | 300 | 180 |
| Example 3 | Zinc carboxy-late salt 3 | 2.5 | Octadecene | Se, S | Oleoyl chloride | 15 | 50 | 230 | 300 | 180 |
| Example 4 | Zinc carboxy-late salt 4 | 2.3 | Octadecene | Se, S | Oleoyl chloride | 15 | 50 | 230 | 300 | 180 |
| Example 5 | Zinc carboxy-late salt 5 | 1.9 | Octadecene | Se, S | Oleoyl chloride | 15 | 50 | 230 | 300 | 180 |
| Example 6 | Zinc carboxy-late salt 1 | 1.5 | Octadecene | Se, S | Oleoyl chloride | 15 | 50 | 230 | 300 | 180 |
| Example 7 | Zinc carboxy-late salt 6 | 1.1 | Octadecene | Se, S | Oleoyl chloride | 15 | 50 | 230 | 300 | 180 |
| Comparative Example 1 | Zinc carboxy-late salt 7 | 3.1 | Octadecene | Se, S | Oleoyl chloride | 15 | 50 | 230 | 300 | 180 |
| Comparative Example 2 | Zinc carboxy-late salt 8 | 0.0 | Octadecene | Se, S | Oleoyl chloride | 15 | 50 | 230 | 300 | 180 |

[Table 5]

| | Shell | $\lambda_{max}$ (nm) | FWHM (nm) | QY (%) |
|---|---|---|---|---|
| Example 1 | ZnSe | 630.5 | 36.6 | 91.3 |
| Example 2 | ZnSe/ZnS | 630.3 | 36.4 | 92.2 |
| Example 3 | ZnSe/ZnS | 629.2 | 36.4 | 91.2 |
| Example 4 | ZnSe/ZnS | 626.7 | 35.3 | 91.0 |
| Example 5 | ZnSe/ZnS | 628.8 | 36.5 | 90.3 |
| Example 6 | ZnSe/ZnS | 632.5 | 37.0 | 90.2 |
| Example 7 | ZnSe/ZnS | 629.3 | 36.8 | 90.0 |
| Comparative Example 1 | ZnSe/ZnS | 628.8 | 37.7 | 87.3 |
| Comparative Example 2 | ZnSe/ZnS | 631.7 | 36.7 | 85.0 |

## Claims

**1.** A method for producing a core/shell type semiconductor particle comprising

a shell forming process at which a raw material zinc carboxylate salt and a group VI element precursor are added to a core particle dispersion solution to cause a reaction between the raw material zinc carboxylate salt and the group VI element precursor in the presence of the core particle to form a shell that includes zinc and a group VI element on a surface of the core particle, wherein
a ratio of carboxylic acids having 8 to 10 carbon atoms in whole of carboxylic acids that form the raw material zinc carboxylate salt is 80.0% by mass or more, and
an average branching degree of the whole of the carboxylic acids that form the raw material zinc carboxylate salt is in a range of 1.1 to 2.9, and wherein
the average branching degree is determined as described in the description.

**2.** The method for producing the core/shell type semiconductor nanoparticle according to claim 1, wherein the core particle comprises In and P.

**3.** The method for producing the core/shell type semiconductor nanoparticle according to claim 2, wherein an addition amount of the raw material zinc carboxylate salt is such that a mole ratio of Zn in the raw material zinc carboxylate salt to In in the core particle (Zn/In) is in a range of 5 to 50.

**4.** The method for producing the core/shell type semiconductor nanoparticle according to any one of claims 1 to 3, wherein the reaction between the raw material zinc carboxylate salt and the group VI element precursor is conducted in the presence of a halogen element.

**5.** A core/shell type semiconductor nanoparticle composite comprising: a core/shell type semiconductor nanoparticle and a ligand that is coordinated to a surface of the core/shell type semiconductor nanoparticle, wherein

the shell comprises at least Zn,
the ligand comprises a carboxylic acid,
a ratio of carboxylic acids having 8 to 10 carbon atoms in whole of carboxylic acids that are included as the ligand is 80% by mass or more, and
an average branching degree of the whole of the carboxylic acids that are included as the ligand is in a range of 1.1 to 2.9, and wherein
the average branching degree is determined as described in the description.

**6.** The core/shell type semiconductor nanoparticle composite according to claim 5, wherein the core comprises In and P.

**7.** The core/shell type semiconductor nanoparticle composite according to claim 5 or 6, wherein an emission peak wavelength of the core/shell type semiconductor nanoparticle composite is in a range of 590 to 650 nm.

8. The core/shell type semiconductor nanoparticle composite according to any one of claims 5 to 7, wherein a full width at half maximum (FWHM) of an emission spectrum of the core/shell type semiconductor nanoparticle composite is 37.0 nm or less.

9. The core/shell type semiconductor nanoparticle composite according to any one of claims 5 to 8, wherein the shell further comprises at least one of Se and S.

10. The core/shell type semiconductor nanoparticle composite according to any one of claims 5 to 9, wherein a quantum yield (QY) of the core/shell type semiconductor nanoparticle composite is 90.0% or more.

11. The core/shell type semiconductor nanoparticle composite according to any one of claims 5 to 10, wherein a ratio of the carboxylic acid in all ligands that are coordinated to the core/shell type semiconductor nanoparticle composite is in a range of 1.0 to 15.0% by mass.

**Patentansprüche**

1. Verfahren zur Herstellung eines Kern/Schale-Halbleiterteilchens, umfassend

   ein Schalenbildungsverfahren, bei dem ein Zinkcarboxylatsalz als Rohmaterial und eine Vorstufe eines Elements der Gruppe VI zu einer Kernteilchen-Dispersionslösung hinzugefügt werden, um eine Reaktion zwischen dem Zinkcarboxylatsalz als Rohmaterial und der Vorstufe des Elements der Gruppe VI in Gegenwart des Kernteilchens zu bewirken und so eine Schale zu bilden, die Zink und ein Element der Gruppe VI auf einer Oberfläche des Kernteilchens enthält, wobei
   ein Anteil der Carbonsäuren mit 8 bis 10 Kohlenstoffatomen an allen Carbonsäuren, welche das Rohmaterial-Zinkcarboxylatsalz bilden, 80,0 Masseprozent oder mehr beträgt,
   ein durchschnittlicher Verzweigungsgrad aller Carbonsäuren, welche das Rohmaterial-Zinkcarboxylatsalz bilden, in einem Bereich von 1,1 bis 2,9 ist, wobei der durchschnittliche Verzweigungsgrad wie in der Beschreibung angegeben ermittelt wird.

2. Verfahren zur Herstellung des Kern/Schale-Halbleiternanoteilchens nach Anspruch 1, wobei das Kernteilchen In und P umfasst.

3. Verfahren zur Herstellung des Kern/Schale-Halbleiternanoteilchens nach Anspruch 2, wobei eine Zugabemenge des Rohmaterial-Zinkcarboxylatsalz so bemessen ist, dass das Molverhältnis von Zn im Rohmaterial-Zinkcarboxylatsalz zu In in dem Kernteilchen (Zn/In) in einem Bereich von 5 bis 50 liegt.

4. Verfahren zur Herstellung des Kern/Schale-Halbleiternanoteilchens nach einem der Ansprüche 1 bis 3, wobei die Reaktion zwischen dem Rohmaterial-Zinkcarboxylatsalz und dem Vorläufer des Elements der Gruppe VI in der Gegenwart eines Halogenelements durchgeführt wird.

5. Kern/Schale-Halbleiternanoteilchen-Komposit, umfassend: ein Kern/Schale-Halbleiternanoteilchen und einen Liganden, der an eine Oberfläche des Kern/Schale-Halbleiternanoteilchens koordiniert ist, wobei

   die Schale mindestens Zn enthält,
   der Ligand eine Carbonsäure umfasst,
   ein Anteil der Carbonsäuren mit 8 bis 10 Kohlenstoffatomen an allen Carbonsäuren, die als der Ligand enthalten sind, 80 Masseprozent oder mehr beträgt, und
   ein durchschnittlicher Verzweigungsgrad aller als Ligand enthaltenen Carbonsäuren in einem Bereich von 1,1 bis 2,9 liegt, und wobei
   der durchschnittliche Verzweigungsgrad wie in der Beschreibung angegeben ermittelt wird.

6. Kern/Schale-Halbleiternanoteilchen-Komposit nach Anspruch 5, wobei der Kern In und P umfasst.

7. Kern/Schale-Halbleiternanoteilchen-Komposit nach Anspruch 5 oder 6, wobei die Emissionsspitzenwellenlänge des Kern/Schale-Halbleiternanoteilchen-Komposits in einem Bereich von 590 bis 650 nm liegt.

8. Kern/Schale-Halbleiternanoteilchen-Komposit nach einem der Ansprüche 5 bis 7, wobei die Halbwertsbreite

(FWHM) des Emissionsspektrums des Kern/Schale-Halbleiternanoteilchen-Komposits 37,0 nm oder weniger beträgt.

9. Kern/Schale-Halbleiternanoteilchen-Komposit nach einem der Ansprüche 5 bis 8, wobei die Schale weiter mindestens eines von Se und S umfasst.

10. Kern/Schale-Halbleiternanoteilchen-Komposit nach einem der Ansprüche 5 bis 9, wobei die Quantenausbeute (QY) des Kern/Schale-Halbleiternanoteilchen-Komposits 90,0 % oder mehr beträgt.

11. Kern/Schale-Halbleiternanoteilchen-Komposit nach einem der Ansprüche 5 bis 10, wobei ein Verhältnis der Carbonsäure in allen Liganden, die an das Kern/Schale-Halbleiternanoteilchen-Komposit koordiniert sind, in einem Bereich von 1,0 bis 15,0 Masseprozent liegt.

## Revendications

1. Procédé de production d'une particule de semiconducteur de type noyau/coque comprenant

   un processus de formation de coque lors duquel un sel de carboxylate de zinc de matière première et un précurseur d'élément du groupe VI sont ajoutés à une solution de dispersion de particule de noyau pour provoquer une réaction entre le sel de carboxylate de zinc de matière première et le précurseur d'élément du groupe VI en présence de la particule de noyau pour former une coque qui inclut du zinc et un élément du groupe VI sur une surface de la particule de noyau, dans lequel
   un rapport d'acides carboxyliques ayant 8 à 10 atomes de carbone dans l'ensemble des acides carboxyliques qui forment le sel de carboxylate de zinc de matière première est de 80,0 % en masse ou plus, et
   un degré de ramification moyen de l'ensemble des acides carboxyliques qui forment le sel de carboxylate de zinc de matière première est dans une plage de 1,1 à 2,9, et dans lequel
   le degré de ramification moyen est déterminé tel que décrit dans la description.

2. Procédé de production de la particule de semiconducteur de type noyau/coque selon la revendication 1, dans lequel la particule de noyau comprend In et P.

3. Procédé de production de la particule de semiconducteur de type noyau/coque selon la revendication 2, dans lequel une quantité d'addition du sel de carboxylate de zinc de matière première est telle qu'un rapport molaire de Zn dans le sel de carboxylate de zinc de matière première sur In dans la particule de noyau (Zn/In) est dans une plage de 5 à 50.

4. Procédé de production de la particule de semiconducteur de type noyau/coque selon l'une quelconque des revendications 1 à 3, dans lequel la réaction entre le sel de carboxylate de zinc de matière première et l'élément précurseur du groupe VI est réalisée en présence d'un élément halogène.

5. Composite de nanoparticule de semiconducteur de type noyau/coque comprenant : une nanoparticule de semiconducteur de type noyau/coque et un ligand qui est coordonné à une surface de la nanoparticule de semiconducteur de type noyau/coque, dans lequel

   la coque comprend au moins Zn,
   le ligand comprend un acide carboxylique,
   un rapport d'acides carboxyliques ayant 8 à 10 atomes de carbone dans l'ensemble des acides carboxyliques qui sont inclus en tant que ligand est de 80,0 % en masse ou plus, et
   un degré de ramification moyen de l'ensemble des acides carboxyliques qui sont inclus en tant que ligand est dans une plage de 1,1 à 2,9, et dans lequel
   le degré de ramification moyen est déterminé tel que décrit dans la description.

6. Composite de nanoparticule de semiconducteur de type noyau/coque selon la revendication 5, dans lequel le noyau comprend In et P.

7. Composite de nanoparticule de semiconducteur de type noyau/coque selon la revendication 5 ou 6, dans lequel une longueur d'onde de pic d'émission du composite de nanoparticule de semiconducteur de type noyau/coque est dans une plage de 590 à 650 nm.

**8.** Composite de nanoparticule de semiconducteur de type noyau/coque selon l'une quelconque des revendications 5 à 7, dans lequel une largeur à mi-hauteur (FWHM) d'un spectre d'émission du composite de nanoparticule de semiconducteur de type noyau/coque est de 37,0 nm ou moins.

**9.** Composite de nanoparticule de semiconducteur de type noyau/coque selon l'une quelconque des revendications 5 à 8, dans lequel la coque comprend en outre au moins un de Se et S.

**10.** Composite de nanoparticule de semiconducteur de type noyau/coque selon l'une quelconque des revendications 5 à 9, dans lequel un rendement quantique (QY) du composite de nanoparticule de semiconducteur de type noyau/coque est de 90,0 % ou plus.

**11.** Composite de nanoparticule de semiconducteur de type noyau/coque selon l'une quelconque des revendications 5 à 10, dans lequel un rapport de l'acide carboxylique dans tous les ligands qui sont coordonnés au composite de nanoparticule de semiconducteur de type noyau/coque est dans une plage de 1,0 à 15,0 % en masse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008140495 A2
- WO 2019515338 A


### Non-patent literature cited in the description


- **RENGUO XIE et al.** *J.AM.CHEM.SOC.*, 2005, vol. 127, 7480-7488
- **KEN-TYE YONG et al.** *ACS Nano*, 2009, vol. 3, 502-510